# EUROPÄISCHE PATENTSCHRIFT

(11) **EP 1 709 727 B1**
(45) Veröffentlichungstag und Bekanntmachung des Hinweises auf die Patenterteilung: **06.06.2007**
(21) Anmeldenummer: 05700955.7
(22) Anmeldetag: 15.01.2005
(51) Int. Cl.: H02P 9/48

(54) **VERFAHREN ZUR VERRINGERUNG DER DREHZAHL EINES ANTRIEBSSTRANGS IN EINER WIND-ENERGIEANLAGE SOWIE WINDENERGIEANLAGE MIT MINDESTENS ZWEI NENNDREHZAHLEN**
METHOD FOR REDUCING THE ROTATIONAL SPEED OF A DRIVETRAIN IN A WIND ENERGY PLANT AND WIND ENERGY PLANT WITH AT LEAST TWO NOMINAL SPEEDS
PROCEDE POUR REDUIRE LA VITESSE DE ROTATION D'UNE TRANSMISSION DANS UNE EOLIENNE ET EOLIENNE PRESENTANT AU MOINS DEUX VITESSES DE ROTATION NOMINALES

(30) Priorität: 29.01.2004 DE 102004004350
(43) Veröffentlichungstag der Anmeldung: 11.10.2006
(73) Patentinhaber: NORDEX ENERGY GmbH, 22848 Norderstedt (DE)
(72) Erfinder: NIELSEN, Leif, DK-7330 Brande (DK); ROSSI, Clemens, 45772 Marl (DE)
(74) Vertreter: Hauck Patent- und Rechtsanwälte
(86) Internationale Anmeldenummer: PCT/EP2005/000366
(87) Internationale Veröffentlichungsnummer: WO 2005/074120

(56) Entgegenhaltungen:
- EP-A- 0 124 698
- DE-A1- 19 634 464
- GB-A- 630 540
- US-A- 2 726 360

## Beschreibung

Die vorliegende Erfindung betrifft ein Verfahren zur Verringerung der Drehzahl eines Antriebsstrangs in einer Windenergieanlage mit mindestens zwei Asynchronmaschinen, wobei die Drehzahl von einer ersten Drehzahl auf eine zweite Drehzahl verringert wird. Die Erfindung betrifft ebenfalls ein Verfahren für eine Windenergieanlage mit mindestens einer polumschaltbaren Asynchronmaschine. Auch betrifft die Erfindung eine Windenergieanlage mit einer Asynchronmaschineneinrichtung, wobei diese mit mindestens zwei Asynchronmaschinen oder mit einer polumschaltbaren Asynchronmaschine ausgeführt sein kann.

Windenergieanlagen, bei denen eine Leistungsbegrenzung durch Nutzung des Stall-Effekts erfolgt, also durch Abriß der Strömung am Rotorblatt, können mit zwei oder mehreren unterschiedlichen Drehzahlen arbeiten. Dazu sind diese Windenergieanlagen entweder mit einer polumschaltbaren Asynchronmaschine oder mit mehreren Asynchronmaschinen ausgestattet. Bei einer polumschaltbaren Asynchronmaschine wird die Polpaarzahl der Maschine geändert. Beispielsweise lassen sich bei einer sogenannten Dahlander-Wicklung durch Vertauschen der Wicklungsenden einer Hälfte der Spule zwei Polpaarzahlen mit Verhältnis 1:2 realisieren. Auch andere Polpaarzahlverhältnisse sind möglich, diese werden in der Regel durch zwei oder mehr getrennte Wicklungen ausgeführt. Es sind polumschaltbare Asynchronmaschinen mit zwei, drei oder mehr diskreten Drehzahlen bekannt.

Die Verwendung von mehreren Asynchronmaschinen oder einer oder mehrerer umschaltbarer Asynchronmaschinen bietet den Vorteil, daß die Windenergieanlage abhängig von den herrschenden Windverhältnissen wahlweise mit unterschiedlichen Drehzahlen arbeiten kann.

Das Konzept solcher Windenergieanlagen mit einer oder mehreren festen Drehzahlen wird auch als das "dänische Konzept" bezeichnet. R. Gasch beschreibt in "Windkraftanlagen: Grundlagen und Entwurf", Teubner Stuttgart 1996 auf Seiten 316-320, daß beim Umschalten von der niedrigen auf die höhere Drehzahl einfach der Generator mit der niedrigen Drehzahl vom Netz getrennt und abgewartet wird, bis sich durch die Wirkung des Windes die Drehzahl des Antriebsstrangs so weit erhöht hat, daß der Generator für die höhere Drehzahl mit dem Netz verbunden werden kann.

Aus DE 196 34 464 C2 ist bekannt, daß beim Umschalten von der höheren Drehzahl auf die niedrigere Drehzahl der Generator für die höhere Drehzahl vom Netz getrennt und anschließend der Generator für die niedrigere Drehzahl mit dem Netz verbunden wird. Dies bewirkt eine Abbremsung des Antriebsstrangs auf die Drehzahl des Generators mit der niedrigen Drehzahl. Wie in DE 196 34 464 C2, Spalte 2, Zeile 64 bis Spalte 3, Zeile 45 beschrieben ist, führt dies zu sehr hohen Belastungen des Antriebsstrangs und zu erheblichen Rückwirkungen ins Netz. Auch können unter ungünstigen Umständen Schäden am Generator auftreten. DE 196 34 464 C2 schlägt daher vor, einen Retarder einzusetzen, der elektrisch zugeschaltet wird, wenn der asynchrone Generator in Betriebszuständen oberhalb des optimalen Bereichs betrieben wird.

Aus DE 101 53 798 C2 ist eine Vorrichtung zum Bremsen des Antriebsstrangs einer Windenergieanlage bei einer unerwünscht hohen Belastung bekannt, bei der zusätzlich zu einem Verzögerungsmoment ein auf die Eigenfrequenz des Antriebsstrangs abgestimmtes, phasenversetztes Verzögerungsmoment zusätzlich durch eine hydraulische Bremse aufgebracht wird. Hierdurch wird eine schlagartige Einleitung des maximalen Verzögerungsmoments in den Antriebsstrang verhindert, wodurch sich dessen Belastung reduziert.

E. Philippow beschreibt im Taschenbuch Elektrotechnik, Band 5, VEB Verlag Technik Berlin, 2. unveränderte Auflage, 1986, Seiten 406-414 ein Nutzbremsen bei Asynchronmaschinen.

In Technical Notes D4, 2001 der Firma ABB Industry Oy, Finnland sind eine Reihe von Bremssystemen für die Verwendung bei Kränen, Aufzügen und Skiliften beschrieben. Als eine von vielen möglichen Bremsverfahren wird eine Gegenstrombremse beschrieben, bei der ein Motor in die entgegengesetzte Drehrichtung geschaltet wird. Nach Abbremsung bis zum Stillstand beginnt der Motor sich in die entgegengesetzte Richtung zu drehen, wenn der Strom nicht rechtzeitig unterbrochen wird. Von diesem Verfahren wird beschrieben, daß es ein sehr hohes Bremsmoment erzeugt, wodurch eine starke Temperaturbildung in dem Motor einsetzt.

Der Erfindung liegt die Aufgabe zugrunde, ein Verfahren zur Verringerung der Drehzahl am Antriebsstrang zu schaffen und eine Windenergieanlage bereitzustellen, bei dem(r) durch die Verringerung der Drehzahl keine übergroßen Belastungen für den Antriebsstrang und für die Asynchronmaschine(n) sowie Rückwirkungen ins Netz entstehen.

Die erfindungsgemäße Aufgabe wird durch ein Verfahren mit den Merkmalen gemäß Anspruch 1 und 9 gelöst. Ebenfalls wird die Aufgabe durch eine Windenergieanlage mit den Merkmalen aus Anspruch 17 gelöst. Vorteilhafte Ausgestaltungen der Verfahren und der Windenergieanlage bilden die Gegenstände der Unteransprüche.

Bei dem erfindungsgemäßen Verfahren zur Verringerung der Drehzahl des Antriebsstrangs in einer Windenergieanlage mit mindestens zwei Asynchronmaschinen wird die Drehzahl von einer ersten Drehzahl auf eine zweite Drehzahl verringert. Hierbei ist die erste Drehzahl einer ersten Asynchronmaschine und die zweite Drehzahl einer zweiten Asynchronmaschine als (Nenn)Drehzahl zugeordnet. In einem ersten Verfahrensschritt des erfindungsgemäßen Verfahrens wird die erste Asynchronmaschine vom Netz getrennt. Bevorzugt ist zu diesem Zeitpunkt keine der Asynchronmaschinen an das Netz angeschlossen. In einem nachfolgenden Verfahrensschritt wird eine der Asynchronmaschinen mit vertauschter Polung mit dem Netz verbunden. Hierdurch wird ein Bremsmoment auf den sich drehenden Antriebsstrang ausgeübt. In einem nachfolgenden Schritt wird die Asynchronmaschine mit der vertauschten Polung vom Netz getrennt, wenn die Drehzahl des Antriebsstrangs kleiner als ein vorbestimmter Drehzahlwert ist. Nachfolgend wird die zweite Asynchronmaschine in einer Polung für den Generatorbetrieb mit dem Netz verbunden. Der Betrieb der Windenergieanlage kann so fortgesetzt werden. Obwohl bekannt ist, daß bei Gegenstrombremsen von Motoren ein sehr hohes Bremsmoment entsteht, führt dieses Verfahren bei seiner Anwendung am Generator einer Windenergieanlage zu verhältnismäßig niedrigen Momenten im Antriebsstrang und belastet diesen nicht unnötig. Im Gegensatz zu der ebenfalls häufig bei Windenergieanlagen vorgesehenen aerodynamischen Bremse, bei der die Spitze des Rotorblatts um ungefähr 80° verdreht wird, tritt bei dem erfindungsgemäßen Bremsverfahren keine übermäßige Geräuschentwicklung auf. Auch werden weder Feststell- noch Betriebsbremse zum Umschalten der Drehzahl eingesetzt.

In einer bevorzugten Ausgestaltung wird die vertauschte Polung aufgehoben, wenn die erreichte Drehzahl einen vorbestimmten Wert, der kleiner oder gleich der Synchrondrehzahl der zweiten Asynchronmaschine ist, unterschreitet. Es erfolgt also keine Bremsung des Antriebsstrangs bis zum Stillstand.

Vorzugsweise wird zum Heruntersetzen der Drehzahl die erste Asynchronmaschine mit vertauschter Polung mit dem Netz verbunden. Alternativ oder zusätzlich kann auch die zweite Asynchronmaschine mit vertauschter Polung mit dem Netz verbunden werden. Bevorzugt schaltet ein Thyristorsteller die Asynchronmaschinen an das Netz, wobei bei Erreichen der Nenndrehzahl der Thyristorsteller durch ein Netzschütz überbrückt wird. Der Thyristorsteller wird sowohl zur Begrenzung des Stroms beim Gegenstrombremsen als auch bei der Aufnahme des Generatorbetriebs des zweiten Generators eingesetzt, wobei nach Erreichen des Betriebspunkts oder nach Ablauf einer vorbestimmten Zeitdauer der Thyristorsteller überbrückt wird.

Das erfindungsgemäße Verfahren kann ebenfalls bei einer polumschaltbaren Asynchronmaschine mit zwei oder mehreren diskreten Drehzahlen eingesetzt werden. Die polumschaltbare Asynchronmaschine besitzt in einer ersten Stufe eine erste Drehzahl und in einer zweiten Stufe eine zweite, kleinere Drehzahl. Bei dem erfindungsgemäßen Verfahren wird die Asynchronmaschine in einem ersten Schritt vom Netz getrennt und nachfolgend wird eine Stufe der Asynchronmaschine mit vertauschter Polung mit dem Netz verbunden. Die Stufe mit der vertauschten Polung wird wieder vom Netz getrennt, wenn die Drehzahl des Antriebsstrangs kleiner als ein vorbestimmter Wert für eine Drehzahl ist. Bevorzugt ist auch hier der vorbestimmte Wert für die Drehzahl die Synchrondrehzahl der zweiten Stufe oder ein kleinerer Vorgabewert. Zweckmäßigerweise ist auch die polumschaltbare Asynchronmaschine wieder über einen Thyristorsteller an das Netz angeschlossen, der nach Erreichen des Generatorbetriebs durch ein Netzschütz überbrückt wird.

Die der Erfindung zugrundeliegende Aufgabe wird ebenfalls durch eine Windenergieanlage mit einer Asynchronmaschineneinrichtung gelöst, die mindestens zwei Drehzahlen besitzt, wobei eine Schalteinrichtung in einer Verbindung zwischen der Asynchronmaschineneinrichtung und dem Netz vorgesehen ist, die die Polung an der Asynchronmaschineneinrichtung zur Gegenstrombremsung vertauscht.

In einer bevorzugten Ausgestaltung besitzt die Asynchronmaschineneinrichtung zwei Asynchronmaschinen mit unterschiedlicher Drehzahl, wobei die Schalteinrichtung in einer Verbindung einer der Asynchronmaschinen mit dem Netz vorgesehen ist. Bevorzugt handelt es sich hierbei um die zweite Asynchronmaschine mit der niedrigeren Drehzahl.

Alternativ kann die Schalteinrichtung auch in einer Verbindung zu der ersten Asynchronmaschine mit der höheren Drehzahl vorgesehen sein. Auch kann die Schalteinrichtung derart angeordnet sein, daß eine Umpolung an beiden, konstruktiv getrennt ausgebildeten Asynchronmaschinen stattfindet.

Die Asynchronmaschineneinrichtung kann in einer alternativen Ausgestaltung auch eine polumschaltbare Asynchronmaschine aufweisen, die mindestens zwei Stufen mit unterschiedlichen Drehzahlen besitzt, wobei die Schalteinrichtung die Polung in der ersten oder zweiten Stufe vertauscht.

Bevorzugt ist die Windenergieanlage mit einem Thyristorsteller versehen, der durch ein Netzschütz parallel überbrückt wird.

Ein bevorzugtes Ausführungsbeispiel wird anhand der nachfolgenden Figuren näher beschrieben. Es zeigt:
- Fig. 1: ein Flußdiagramm zu dem erfindungsgemäßen Verfahren,
- Fig. 2: ein Schaltdiagramm zu der Windenergieanlage und
- Fig. 3: einen beispielhaften Verlauf für eine Drehzahl beim Abbremsen.

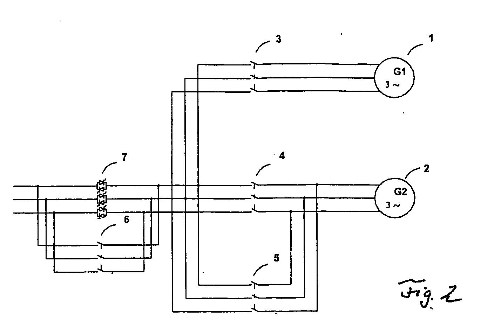

Das Ausführungsbeispiel aus Fig. 2 betrifft zwei Asynchronmaschinen G1, G2, die allgemein mit dem Bezugszeichen 1 und 2 versehen sind. In dem dargestellten Ausführungsbeispiel ist dem Generator G1 eine hohe Drehzahl n₁ zugeordnet, beispielsweise eine Drehzahl von 1500 min⁻¹. Dem Generator G2 ist eine niedrigere Drehzahl n₂, beispielsweise von 1000 min⁻¹, zugewiesen. Die Nennleistung des Generators G2 kann beispielsweise 200 kW betragen, während die Nennleistung des Generators G1 in dem Beispiels 1 MW beträgt. Die Generatoren können über die Schalter 3 und 4 jeweils mit dem Netz verbunden werden. Beim Einschaltvorgang der Windenergieanlage wird in der Regel der Generator über einen Thyristorsteller 7 auf das Netz geschaltet, um den Einschaltstrom des Generators zu begrenzen. Nach einigen Sekunden wird der Thyristorsteller 7 durch das Netzschütz 6 überbrückt.

Bei der erfindungsgemäßen Windenergieanlage ist parallel zu dem Schalter 4 ein Umschalter 5 vorgesehen, der im geschlossenen Zustand die Polung an dem Generator G2 vertauscht. Durch die vertauschte Polung an dem Generator G2 erfolgt eine Gegenstrombremsung des Antriebsstrangs, bis die erzielte Drehzahl kleiner als die Synchrondrehzahl des Generators G2 ist. Schalter 3, 4 und 5 sind derart ausgebildet, daß diese gegeneinander mechanisch oder elektronisch verriegelt sind, um lediglich einen dieser drei Schalter mechanisch zu schließen.

Das erfindungsgemäße Verfahren wird von einer nicht dargestellten Steuereinheit oder einem Steuermodul innerhalb einer Steuereinrichtung durchgeführt. Als Eingangsgröße an der Steuereinheit liegt ein gemessener oder berechneter Wert für die Drehzahl des Antriebsstrangs an. In der Steuereinheit abgelegt ist ein Drehzahlwert nₓ, bis zu dem abgebremst wird. Als Ausgangsgröße kann die Steuereinrichtung den Schalter 5 ansteuern und gegebenenfalls Steuersignale zur Ansteuerung der weiteren Schalter und/oder des Thyristorstellers absetzen oder diese auch direkt ansteuern. Ferner können in der Steuereinheit weitere Parameter für Umschaltbedingungen abgelegt sein, wobei die Steuereinheit dann auf entsprechende Kenngrößen zur Überprüfung der Umschaltbedingungen zurückgreifen kann. Mögliche Umschaltbedingungen sind:
- Windgeschwindigkeit,
- Generatorstrom,
- Generatorleistung.

Auch Kombinationen dieser Bedingungen sind denkbar.

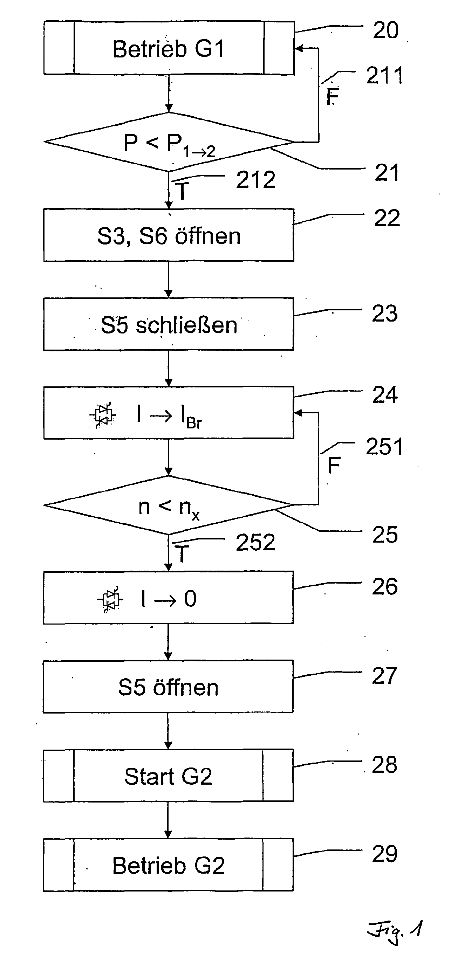

Nachfolgend mit Bezug auf Fig. 1. Das Verfahren zum Umschalten von Generator G1 auf Generator G2 erfolgt mit folgenden Schritten:
- Während des Betriebs 20 von G1 wird geprüft, ob eine Abschaltbedingung 21 erfüllt ist. Ist die Leistung P des Generators kleiner als eine vorbestimmte Umschaltleistung P_{1→2}, so ist in Schritt 212 die Umschaltbedingung erfüllt, ansonsten kehrt das Verfahren mit Schritt 211 zum Betrieb von G1 und zur Abfrage 21 zurück,
- bei erfüllter Umschaltbedingung wird in Schritt 22 durch Öffnen der Schalter 3 und 6 der Generator G1 vom Netz getrennt,
- in Schritt 23 wird der Generator G2 mit dem Netz mit vertauschter Zuleitung durch Schließen des Schalters 5 und Ansteuern des Thyristorstellers 7 in Schritt 24 verbunden, wobei mit Hilfe des Thyristorstellers 7 der Strom I auf einen geeigneten Wert I_{Br} begrenzt wird,
- nach Erreichen einer vorgegebenen Drehzahl nₓ, die kleiner als die Synchrondrehzahl des Generators G2, vgl. Schritt 25, Zweig 252, ist, wird der Generator G2 durch den Thyristorsteller 7 (Verringern des Stroms bis auf 0, vgl. Schritt 26) und anschließendes Öffnen des Schalters 5, vgl. Schritt 27, vom Netz getrennt,
- durch den Wind wird der Antriebsstrang wieder auf die Nenndrehzahl n₂ des Generators G2 beschleunigt. Hierbei handelt es sich ausgehend von der Drehzahl nₓ um einen an sich bekannten Startvorgang 28 für den Generator G2. Dieser erfolgt beispielsweise, indem der Schalter 4 geschlossen und der Thyristorsteller 7 angesteuert wird, bis ein Betriebspunkt erreicht wurde, anschließend wird durch Schalter 6 der Thyristorsteller 7 überbrückt und der Generator geht in den Generatorbetrieb 29 über.

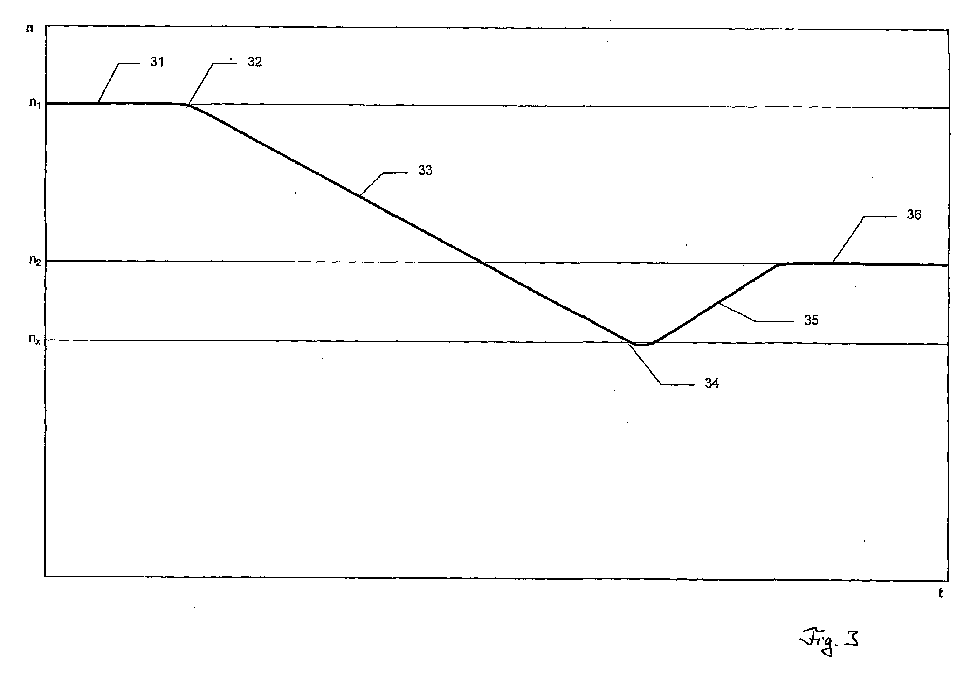

Fig. 3 zeigt schematisch den Drehzahlverlauf des Antriebsstrangs über der Zeit. In einem ersten Zeitabschnitt 31 liegt die Drehzahl n₁ zum Betrieb des Generators G1 vor. In Zeitpunkt 32 ist eine Umschaltbedingung erfüllt und es erfolgt eine Abbremsung der Drehzahl 33 bis zu einem Zeitpunkt 34, in dem die Drehzahl kleiner oder gleich einem vorbestimmten Drehzahlwert nₓ ist. Fig. 3 ist zu entnehmen, daß der Wert für nₓ kleiner als die Synchrondrehzahl n₂ des Generators G2 ist. Nachfolgend zu dem Abbremsvorgang erfolgt ein Hochfahren des Generators G2, während der Zeitdauer 35, bis die Drehzahl n₂ für den Generator G2 erreicht wurde und dieser im Zeitintervall 36 seinen regulären Betrieb aufgenommen hat.

## Patentansprüche

1. Verfahren zur Verringerung einer Drehzahl eines Antriebsstrangs in einer Windenergieanlage mit mindestens zwei Asynchronmaschinen (G1, G2) von einer ersten Drehzahl (n₁) auf eine zweite Drehzahl (n₂), wobei die erste Drehzahl einer ersten Asynchronmaschine (G1) und die zweite Drehzahl einer zweiten Asynchronmaschine (G2) zugeordnet ist, mit den folgenden Verfahrensschritten:
- Trennen der ersten Asynchronmaschine (G1) vom Netz,
- Verbinden einer der oder beider Asynchronmaschinen (G1, G2) mit vertauschter Polung (5) mit dem Netz,
- Trennen der Asynchronmaschine oder der Asynchronmaschinen mit vertauschter Polung vom Netz, wenn die Drehzahl des Antriebsstrangs kleiner oder gleich als eine vorbestimmte Drehzahl (nₓ) ist,
- Verbinden der zweiten Asynchronmaschine (G2) mit dem Netz für einen Generatorbetrieb.

2. Verfahren nach Anspruch 1, **dadurch gekennzeichnet, daß** die vorbestimmte Drehzahl (nₓ) kleiner oder gleich der Synchrondrehzahl der zweiten Asynchronmaschine ist.

3. Verfahren nach Anspruch 1 oder 2, **dadurch gekennzeichnet, daß** vor dem Verbinden der zweiten Asynchronmaschine (G2) der Antriebsstrang der Windenergieanlage auf die zweite Drehzahl (n₂) durch den Wind beschleunigt wird.

4. Verfahren nach einem der Ansprüche 1 bis 3, **dadurch gekennzeichnet, daß** der erste Generator (G1) mit vertauschter Polung mit dem Netz verbunden wird.

5. Verfahren nach einem der Ansprüche 1 bis 4, **dadurch gekennzeichnet, daß** der zweite Generator (G2) mit vertauschter Polung mit dem Netz verbunden wird.

6. Verfahren nach einem der Ansprüche 1 bis 5, **dadurch gekennzeichnet, daß** ein Thyristorsteller (7) die Asynchronmaschinen (G1, G2) an das Netz schaltet.

7. Verfahren nach einem der Ansprüche 1 bis 6, **dadurch gekennzeichnet, daß** der Thyristorsteller (7) eine Strombegrenzung für die mit vertauschter Polung verbundene(n) Asynchronmaschine(n) durchführt.

8. Verfahren nach Anspruch 6 oder 7, **dadurch gekennzeichnet, daß** der Thyristorsteller (7) nach Erreichen des Generatorbetriebs über ein Netzschütz (6) überbrückt wird.

9. Verfahren zum Verringern einer Drehzahl eines Antriebsstrangs in einer Windenergieanlage mit mindestens einer polumschaltbaren Asynchronmaschine von einer ersten Drehzahl auf eine zweite Drehzahl, wobei die erste Drehzahl einer ersten Stufe und die zweite Drehzahl einer zweiten Stufe der polumschaltbaren Asynchronmaschine zugeordnet ist, mit folgenden Verfahrensschritten:
- die polumschaltbare Asynchronmaschine wird vom Netz getrennt,
- eine der Stufen der polumschaltbaren Asynchronmaschine wird mit vertauschter Polung mit dem Netz verbunden,
- die Stufe mit der vertauschten Polung wird vom Netz getrennt, wenn die Drehzahl des Antriebsstrangs kleiner als ein vorbestimmter Wert (nₓ) für die Drehzahl ist,
- die zweite Stufe der polumschaltbaren Asynchronmaschine wird wieder mit dem Netz für einen Generatorbetrieb verbunden.

10. Verfahren nach Anspruch 9, **dadurch gekennzeichnet, daß** der vorbestimmte Wert (nₓ) für die Drehzahl kleiner oder gleich der Synchrondrehzahl der zweiten Stufe ist.

11. Verfahren nach Anspruch 9 oder 10, **dadurch gekennzeichnet, daß** vor dem Verbinden der zweiten Stufe der Asynchronmaschine mit dem Netz der Antriebsstrang der Windenergieanlage durch den Wind auf die zweite Drehzahl beschleunigt wird.

12. Verfahren nach einem der Ansprüche 9 bis 11, **dadurch gekennzeichnet, daß** die erste Stufe des Generators mit vertauschter Polung mit dem Netz verbunden wird.

13. Verfahren nach einem der Ansprüche 9 bis 11, **dadurch gekennzeichnet, daß** die zweite Stufe des Generators mit vertauschter Polung mit dem Netz verbunden wird.

14. Verfahren nach einem der Ansprüche 9 bis 13, **dadurch gekennzeichnet, daß** ein Thyristorsteller (7) die Asynchronmaschine an das Netz schaltet.

15. Verfahren nach einem der Ansprüche 9 bis 14, **dadurch gekennzeichnet, daß** der Thyristorsteller (7) eine Strombegrenzung für die Stufe des Generators mit vertauschter Polung durchführt.

16. Verfahren nach Anspruch 14 oder 15, **dadurch gekennzeichnet, daß** der Thyristorsteller (7) nach Erreichen der Nenndrehzahl durch ein Netzschütz (6) überbrückt wird.

17. Windenergieanlage mit einem Rotor und einer Asynchronmaschineneinrichtung, die mindestens zwei Drehzahlen besitzt, **dadurch gekennzeichnet, daß** eine Schalteinrichtung (6) in einer Verbindung zwischen Asynchronmaschineneinrichtung und Netz vorgesehen ist, die eine Polung der Asynchronmaschineneinrichtung zur Gegenstrombremsung vertauscht.

18. Windenergieanlage nach Anspruch 17, **dadurch gekennzeichnet, daß** die Asynchronmaschineneinrichtung, zwei Asynchronmaschinen aufweist, wobei die Schalteinrichtung (5) in einer Verbindung einer oder beider Asynchronmaschinen vorgesehen ist.

19. Windenergieanlage nach Anspruch 18, **dadurch gekennzeichnet, daß** die Schalteinrichtung (5) mit der zweiten Asynchronmaschine (G2) mit der niedrigeren Drehzahl verbunden ist.

20. Windenergieanlage nach Anspruch 18, **dadurch gekennzeichnet, daß** die Schalteinrichtung (5) mit der ersten Asynchronmaschine (G1) mit der höheren Drehzahl verbunden ist.

21. Windenergieanlage nach Anspruch 17, **dadurch gekennzeichnet, daß** die Asynchronmaschineneinrichtung eine polumschaltbare Asynchronmaschine aufweist, wobei die Schalteinrichtung die Polung in der ersten oder zweiten Stufe vertauscht.

22. Windenergieanlage nach einem der Ansprüche 17 bis 21, **dadurch gekennzeichnet, daß** ein Thyristorsteller (7) in einer Verbindung der Asynchronmaschineneinrichtung mit dem Netz vorgesehen ist.

23. Windenergieanlage nach Anspruch 22, **dadurch gekennzeichnet, daß** ein Netzschütz (6) parallel zu dem Thyristorsteller (7) geschaltet ist.

## Claims

1. A method for reducing a rotational speed of a drive train in a wind power plant including at least two asynchronous machines (G1, G2) from a first speed (n₁) to a second speed (n₂), wherein the first speed is associated with a first asynchronous machine (G1) and the second speed is associated with a second asynchronous machine (G2), comprising the process steps below:
- Disconnecting the first asynchronous machine (G1) from the mains,
- Connecting one of or either of the two asynchronous machines (G1, G2) to the mains at a reversed polarity (5),
- Disconnecting the asynchronous machine or asynchronous machines (G1, G2) from the mains at a reversed polarity if the speed of the drive train is smaller than or equal to a predetermined speed (nₓ),
- Connecting the second asynchronous machine (G2) to the mains for a generator operational mode.

2. The method according to claim 1, **characterized in that** the predetermined speed (nₓ) is smaller than or equal to the synchronous speed of the second asynchronous machine.

3. The method according to claim 1 or 2, **characterized in that** the drive train of the wind power plant is accelerated by the wind to the second speed (n₂) before the second asynchronous machine (G2) is connected.

4. The method according to any one of claim 1 to 3, **characterized in that** the first generator (G1) is connected to the mains at a reversed polarity.

5. The method according to any one of claim 1 to 4, **characterized in that** the second generator (G2) is connected to the mains at a reversed polarity.

6. The method according to any one of claim 1 to 5, **characterized in that** a thyristor regulator (7) switches the asynchronous machines (G1, G2) to the mains.

7. The method according to any one of claims 1 to 6, **characterized in that** the thyristor regulator (7) performs a current limitation for (an) asynchronous machine(s) connected at a reversed polarity.

8. The method according to claim 6 or 7, **characterized in that** the thyristor regulator (7) is jumpered via a mains contactor (6) after reaching the generator operational mode.

9. The method for reducing a rotational speed of a drive train in a wind power plant including at least one pole-changeable asynchronous machine from a first speed to a second speed, wherein the first speed is associated with a first stage and the second speed is associated with a second stage of the pole-changeable asynchronous machine, comprising the process steps below:
- The pole-changeable first asynchronous machine is disconnected from the mains,
- One of the stages of the pole-changeable asynchronous machine is connected to the mains at a reversed polarity,
- The stage having the reversed polarity is disconnected from the mains if the speed of the drive train is smaller than or equal to a predetermined speed (nₓ) for the speed,
- The second stage of the pole-changeable asynchronous machine is reconnected to the mains for a generator operational mode.

10. The method according to claim 9, **characterized in that** the predetermined value (nₓ) for the speed is smaller than or equal to the synchronous speed of the second stage.

11. The method according to claim 9 or 10, **characterized in that** the drive train of the wind power plant is accelerated by the wind to the second speed before the second asynchronous machine is connected to the mains.

12. The method according to any one of claims 9 to 11, **characterized in that** the first stage of the generator is connected to the mains at a reversed polarity.

13. The method according to any one of claims 9 to 11, **characterized in that** the second stage of the generator is connected to the mains at a reversed polarity.

14. The method according to any one of claims 9 to 13, **characterized in that** a thyristor regulator (7) switches the asynchronous machine to the mains.

15. The method according to any one of claims 9 to 14, **characterized in that** the thyristor regulator (7) performs a current limitation for the stage of the generator at a reversed polarity.

16. The method according to claim 14 or 15, **characterized in that** the thyristor regulator (7) is jumpered via a mains contactor (6) after reaching the generator operational mode.

17. A wind power plant including a rotor and an asynchronous machine device which has at least two speeds, **characterized in that** a switching device (6) is provided within a connection between the asynchronous machine device and the mains that reverses a polarity of the asynchronous machine device for braking by plugging.

18. The wind power plant according to claim 17, **characterized in that** the asynchronous machine device has two asynchronous machines wherein the switching device (5) is provided within a connection of one or either of the asynchronous machines.

19. The wind power plant according to claim 18, **characterized in that** the switching device (5) is connected to the second asynchronous machine (G2) having the lower speed.

20. The wind power plant according to claim 18, **characterized in that** the switching device (5) is connected to the first asynchronous machine (G1) having the higher speed.

21. The wind power plant according to claim 17, **characterized in that** the asynchronous machine device has a pole-changeable asynchronous machine wherein the switching device reverses the polarity in the first or second stages.

22. The wind power plant according to any one of claims 17 to 21, **characterized in that** a thyristor regulator (7) is provided within a connection of the asynchronous machine device to the mains.

23. The wind power plant according to claim 22, **characterized in that** a mains contactor (6) is connected in parallel with the thyristor regulator (7).

## Revendications

1. Procédé pour réduire la vitesse de rotation d'une transmission dans une éolienne comportant au moins deux machines asynchrones (G1, G2) depuis une première vitesse de rotation (n₁) à une seconde vitesse de rotation (n₂), la première vitesse de rotation étant attribuée à une première machine asynchrone (G1) et la seconde vitesse de rotation à une seconde machine asynchrone (G2), avec les étapes opératoires suivantes :
- déconnecter du réseau la première machine asynchrone (G1),
- raccorder au réseau une des machines asynchrones (G1, G2) ou les deux à polarité commutée (5),
- déconnecter du réseau la machine asynchrone ou les machines asynchrones à polarité commutée lorsque la vitesse de rotation de la transmission est inférieure ou égale à une vitesse de rotation (nₓ) prédéterminée,
- raccorder au réseau la seconde machine asynchrone (G2) pour un fonctionnement sur générateur.

2. Procédé selon la revendication 1, **caractérisé en ce que** la vitesse de rotation (nₓ) prédéterminée est inférieure ou égale à la vitesse de rotation synchrone de la seconde machine asynchrone.

3. Procédé selon la revendication 1 ou 2, **caractérisé en ce qu'**avant le raccordement de la seconde machine asynchrone (G2) la transmission de l'éolienne est accélérée par le vent à la seconde vitesse de rotation (n₂).

4. Procédé selon l'une quelconque des revendications 1 à 3, **caractérisé en ce que** le premier générateur (G1) à polarité commutée est raccordé au réseau.

5. Procédé selon l'une quelconque des revendications 1 à 4, **caractérisé en ce que** le second générateur (G2) à polarité commutée est raccordé au réseau.

6. Procédé selon l'une quelconque des revendications 1 à 5, **caractérisé en ce qu'**un actionneur à thyristor raccorde les machines asynchrones (G1, G2) au réseau.

7. Procédé selon l'une quelconque des revendications 1 à 6, **caractérisé en ce que** l'actionneur à thyristor (7) limite le courant pour la (les) machines(s) asynchrone(s) raccordé(s) à polarité commutée.

8. Procédé selon la revendication 6 ou 7, **caractérisé en ce que** l'actionneur à thyristor (7) est ponté par l'intermédiaire d'un contacteur de réseau (6) après atteinte du fonctionnement sur générateur.

9. Procédé pour réduire la vitesse de rotation d'une transmission dans une éolienne comportant au moins une machine asynchrone à commutation de polarité depuis une première vitesse de rotation à une seconde vitesse de rotation, la première vitesse de rotation étant attribuée à un premier niveau et la seconde vitesse de rotation à un second niveau de la machine asynchrone à commutation de polarité, avec les étapes opératoires suivantes :
- la machine asynchrone à commutation de polarité est déconnectée du réseau,
- un des niveaux de la machine asynchrone à commutation de polarité est raccordé avec polarité commutée au réseau,
- le niveau à polarité commutée est déconnecté du réseau lorsque la vitesse de rotation de la transmission est inférieure à une valeur prédéterminée (nₓ) pour la vitesse de rotation,
- le second niveau de la machine asynchrone à commutation de polarité est à nouveau raccordé au réseau pour un fonctionnement sur générateur.

10. Procédé selon la revendication 9, **caractérisé en ce que** la valeur prédéterminée (nₓ) pour la vitesse de rotation est inférieure ou égale à la vitesse de rotation synchrone du second niveau.

11. Procédé selon la revendication 9 ou 10, **caractérisé en ce que** avant le raccordement au réseau du second niveau de la machine asynchrone, la transmission de l'éolienne est accélérée par le vent à la seconde vitesse de rotation.

12. Procédé selon l'une quelconque des revendications 9 à 11, **caractérisé en ce que** le premier niveau du générateur à polarité commutée est raccordé au réseau.

13. Procédé selon l'une quelconque des revendications 9 à 11, **caractérisé en ce que** le second niveau du générateur à polarité commuté est raccordé au réseau.

14. Procédé selon l'une quelconque des revendications 9 à 13, **caractérisé en ce qu'**un actionneur à thyristor (7) raccorde la machine asynchrone au réseau.

15. Procédé selon l'une quelconque des revendications 9 à 14, **caractérisé en ce que** l'actionneur à thyristor (7) limite le courant pour le niveau du générateur à polarité commutée.

16. Procédé selon la revendication 14 ou 15, **caractérisé en ce que** l'actionneur à thyristor (7) est ponté par l'intermédiaire d'un contacteur de réseau (6) après atteinte de la vitesse de rotation nominale.

17. Eolienne avec un rotor et un dispositif de machine asynchrone qui possède au moins deux vitesses de rotation, **caractérisée en ce qu'**il est prévu un dispositif de commutation (6) dans une liaison entre dispositif de machine asynchrone et réseau, ledit dispositif de commutation commutant une polarité du dispositif de machine asynchrone en vue d'un freinage à contre-courant.

18. Eolienne selon la revendication 17, **caractérisée en ce que** le dispositif de machine asynchrone comporte deux machines asynchrones, le dispositif de commutation (5) étant prévu dans une liaison d'une ou de deux machines asynchrones.

19. Eolienne selon la revendication 18, **caractérisé en ce que** le dispositif de commutation (5) est raccordé à la seconde machine asynchrone (G2) avec la vitesse de rotation inférieure.

20. Eolienne selon la revendication 18, **caractérisée en ce que** le dispositif de commutation (5) est raccordé à la première machine asynchrone (G1) avec la vitesse de rotation supérieure.

21. Eolienne selon la revendication 17, **caractérisée en ce que** le dispositif de machine asynchrone comporte une machine asynchrone à commutation de polarité, le dispositif de commutation commutant la polarité dans le premier ou le second niveau.

22. Eolienne selon l'une quelconque des revendications 17 à 21, **caractérisée en ce qu'**un actionneur à thyristor (7) est prévu dans une liaison du dispositif de machine asynchrone avec le réseau.

23. Eolienne selon la revendication 22, **caractérisée en qu'**un contacteur de réseau (6) est monté parallèlement à l'actionneur à thyristor.
